# EUROPÄISCHE PATENTSCHRIFT

(11) **EP 3 008 800 B1**
(45) Veröffentlichungstag und Bekanntmachung des Hinweises auf die Patenterteilung: **05.05.2021**
(21) Anmeldenummer: 14747604.8
(22) Anmeldetag: 31.07.2014
(51) Int. Cl.: H02K 55/04, H02K 3/52

(54) **ELEKTRISCHE MASCHINE MIT SUPRALEITENDER ROTORSPULE UND ABSTÜTZVORRICHTUNG**
ELECTRIC MACHINE HAVING A SUPERCONDUCTING ROTOR COIL AND A SUPPORTING DEVICE
MOTEUR ÉLECTRIQUE POURVU D'UNE BOBINE DE ROTOR SUPRACONDUCTRICE ET DISPOSITIF D'APPUI

(30) Priorität: 08.08.2013 DE 102013215701
(43) Veröffentlichungstag der Anmeldung: 20.04.2016
(73) Patentinhaber: Rolls-Royce Deutschland Ltd & Co KG, 15827 Blankenfelde-Mahlow (DE)
(72) Erfinder: FRANK, Michael, 15827 Blankenfelde-Mahlow (DE); VAN HASSELT, Peter, 15827 Blankenfelde-Mahlow (DE)
(86) Internationale Anmeldenummer: PCT/EP2014/066453
(87) Internationale Veröffentlichungsnummer: WO 2015/018724

(56) Entgegenhaltungen:
- DE-A1-102005 027 962
- JP-A- 2012 017 846
- Anonym: "Schlaufe, die", Duden, Rechtschreibung , 6. November 2015 (2015-11-06), XP002750629, Gefunden im Internet: URL:http://www.duden.de/rechtschreibung/Sc hlaufe [gefunden am 2015-11-06]

## Beschreibung

Die vorliegende Erfindung betrifft eine elektrische Maschine mit einer um eine Rotationsachse drehbar gelagerten, zu kühlenden supraleitenden Rotorspule, die ferner einen Rotorkörper und wenigstens eine Abstützvorrichtung zur Abstützung der Rotorspule gegen den Rotorkörper umfasst.

Supraleitende Rotorspulen kommen vor allem in Synchronmaschinen, beispielsweise in Generatoren oder in Antrieben zum Einsatz. Bei bekannten elektrischen Maschinen werden die supraleitenden Spulen durch eine Kühlvorrichtung auf sehr tiefe Temperaturen gekühlt. Bei der Verwendung sogenannter Hochtemperatursupraleiter können dies Temperaturen im Bereich von etwa 77 K sein, bei den klassischen Tieftemperatursupraleitern liegen die Betriebstemperaturen sogar noch wesentlich niedriger. In solchen Maschinen sind eine oder mehrere Rotorspulen auf einem Rotorkörper angeordnet und mit diesem mechanisch verbunden. Nach dem Stand der Technik sind die gekühlten Rotorspulen meist auf einem ungekühlten Rotorkörper montiert. Dabei muss die mechanische Verbindung zwischen Rotorspule und Rotorkörper den bei Betrieb auftretenden Kräften standhalten und trotzdem eine ausreichend niedrige Wärmeleitung aufweisen, um die Kühlung der supraleitenden Spule auf die nötige Betriebstemperatur aufrechtzuerhalten.

Bei bekannten Maschinen werden die Rotorspulen mit Stützstreben gehalten, die Kräfte in unterschiedlichen Raumrichtungen zwischen Rotorspule und Rotorkörper übertragen können. Die Stützstreben können auch so dimensioniert sein, dass sie zur Übertragung von beim Betrieb der Maschine auftretenden Drehmomenten von der Spule auf den Rotorkörper oder umgekehrt geeignet sind. Eine solche Aufhängung ist beispielsweise in der WO 03/009454 A2 beschrieben.

Alternativ können die Spulen auch mit einer Mehrzahl an geschlossenen Tragschlaufen gehalten werden, die jeweils als Zugschlaufe ausgebildet sind und so mit der Spule verbunden werden, dass die Spule durch die Übertragung dieser Zugkräfte in verschiedenen Raumrichtungen gehalten ist. Eine solche Aufhängung ist in der DE 102010040495 A1 beschrieben.

Ein Nachteil der beschriebenen Aufhängungssysteme ist, dass die Halteelemente jeweils so dimensioniert werden müssen, dass sie den maximal möglichen auftretenden Kräften standhalten können. Dies führt zu relativ hohen benötigten Materialquerschnitten, die dann auch eine relativ hohe Wärmeleitung zwischen der kühlen Rotorspule und dem ungekühlten Rotorkörper bewirkten. Dadurch ist es schwieriger, eine niedrige Betriebstemperatur der Rotorspulen zu gewährleisten. Die Kühlvorrichtung muss eine relativ hohe Kühlleistung aufweisen und ist somit aufwendig in der Implementierung und im Betrieb.

Die DE 102005027962A1 offenbart eine elektrische Maschine gemäß dem Oberbegriff des Anspruchs 1. In der DE 102005027962 A1 ist eine Aufhängung einer Rotorspule offenbart, bei der die Stützstreben bei einer Überbelastung, beispielsweise bei einem Störfall der Maschine, abknicken können, und bei der nach dem Abknicken ein mechanischer Kontakt zwischen Rotorspule und Rotorkörper durch ein Anschlagelement vermittelt wird. Durch diese Auslegung kann der thermisch wirksame Querschnitt der Stützstreben verringert werden. Ein Nachteil einer solchen Aufhängung mit Stützstreben ist aber die Tatsache, dass die Streben bei einer Überlastung durch ein abruptes Abknicken nachgeben, wobei der durch das Abknicken ermöglichte große Verformungsweg nur durch das Anschlagelement begrenzt wird. Solch eine abrupte Verformung ist typischerweise mit einer Schädigung oder zumindest mit einer Schwächung des Materials der Stützstreben verbunden, selbst wenn die Strebe wieder in einen ungeknickten Zustand zurückkehren kann. Außerdem ist durch den Fangstoß beim Auftreffen der Spule auf das Anschlagelement eine Beschädigung der Spule nicht unwahrscheinlich.

Aus der JP 2012-017846 A ist ferner eine Vibrationsdämpfungseinrichtung bekannt, die Bodenvibrationen zu einer Fertigungseinrichtung mit Präzisionswerkzeugen für ULSI-Schaltkreise oder Flüssigkristalldisplays dämpfen soll. Dabei ist ein an einem Tisch befestigtes Befestigungselement, welches zwischen bogenförmigen Blattfedern geklemmt ist, vorgesehen.

Aufgabe der Erfindung ist es daher eine elektrische Maschine mit einer supraleitenden Rotorspule anzugeben, welche die genannten Nachteile vermeidet.

Diese Aufgabe wird durch die in Anspruch 1 beschriebene elektrische Maschine gelöst. Die erfindungsgemäße Maschine umfasst wenigstens eine um eine Rotationsachse drehbar gelagerte, zu kühlende supraleitende Rotorspule, einen Rotorkörper und wenigstens eine Abstützvorrichtung zur Abstützung der wenigstens einen Rotorspule gegen den Rotorkörper. Die Abstützvorrichtung umfasst ein elastisch verformbares Stützelement, welches auch als Stützschlaufe bezeichnet wird, und ein Anschlagelement, wobei die Stützschlaufe so ausgelegt ist, dass sie die wenigstens eine Rotorspule gegen bei einem Normalbetrieb der Spule auftretende Kräfte abstützt und dabei einen über das Anschlagelement vermittelten Kontakt zwischen Rotorspule und Rotorkörper verhindert. Die Stützschlaufe ist so weit elastisch verformbar, dass durch in einem Störungsfall auftretende Kräfte ein mechanischer Kontakt zwischen Rotorspule und Rotorkörper über das Anschlagelement zustande kommen kann.

Der Vorteil der erfindungsgemäßen Maschine gegenüber Maschinen mit herkömmlichen Aufhängungssystemen ist, dass durch die zweiteilige Ausführung der Abstützvorrichtung die Anforderungen an die maximal auszuhaltenden Kräfte von den Anforderungen an die thermische Trennung von Rotorspule und Rotorkörper zumindest teilweise entkoppelt werden können. Der erfindungsgemäßen Ausführung liegt die Erkenntnis zugrunde, dass bei einem Normalbetrieb der Maschine wesentlich niedrigere Kräfte an der Rotorspule auftreten als die Kräfte, die bei einem Störfall maximal auftreten können. Solch ein Störfall kann beispielsweise ein Stoßkurzschluss sein, bei dem Überlastkräfte auftreten können, die mehr als das Fünffache und/oder mehr als das Zehnfache der beim Normalbetrieb auftretenden Kräfte betragen. Die elastisch verformbare Stützschlaufe der erfindungsgemäßen Abstützvorrichtung ist so dimensioniert, dass sie die Rotorspule gegen die bei einem Normalbetrieb auftretenden Kräfte abstützt und bei diesen Kräften nur kleine Bewegungen der Spule ermöglicht. Die für solche eher niedrigen Kräfte ausgelegte Stützschlaufe kann dadurch einen niedrigen für die Wärmeübertragung wirksamen Querschnitt aufweisen, da die mechanische Festigkeit nicht auf den Störfall ausgelegt sein muss.

Tritt ein Störfall der elektrischen Maschine ein und treten Kräfte auf, die wesentlich größer als die Kräfte im Normalbetrieb sind, dann kann sich die Stützschlaufe stärker als im Normalbetrieb verformen und durch ihre Verformung einen indirekten Kontakt zwischen Rotorkörper und Rotorspule über das Anschlagelement bewirken. Durch den so entstehenden mechanischen Kontakt können die im Störfall auftretenden Überlastkräfte dann über das Anschlagelement übertragen werden, und die Stützschlaufe ist nicht diesen wesentlich höheren Kräften ausgesetzt. Das Anschlagelement kann wesentlich steifer ausgeführt sein als die Stützschlaufe. Es kann auch bei einem Zustandekommen des mechanischen Kontaktes zwischen Rotorspule, Anschlagelement und Rotorkörper eine höhere Wärmeleitung bewirken als die Stützschlaufe alleine. Diese größere Wärmeleitung wirkt aber nur so lange, wie der Störfall anhält. Nach Beendigung des Störfalls hören die Überlastkräfte auf zu wirken, und die Stützschlaufe kann sich reversibel wieder so weit zurück verformen, dass der über das Anschlagelement vermittelte mechanische Kontakt zwischen Rotorspule und Rotorkörper aufgehoben wird. Durch diesen reversiblen Mechanismus wirkt die durch das Anschlagelement erhöhte Wärmeleitung nur für die vergleichsweise kurze Zeitspanne eines Störfalls und nicht während der gesamten Betriebsdauer. Während der Dauer des Normalbetriebs ist die Wärmeleitung zwischen Rotorspule und Rotorkörper vorteilhaft gering. Eine für die Kühlung der supraleitenden Spule vorgesehene Kühlvorrichtung kann dadurch im Normalbetrieb mit gegenüber herkömmlichen Maschinen deutlich verringerter Leistung betrieben werden.

Die erste Stufe der erfindungsgemäßen Abstützvorrichtung ist als Schlaufe ausgeführt. Das heißt, diese erste Stufe der Abstützvorrichtung verbindet die Spule und den Rotorkörper über zwei getrennte Zweige. Eine solche Schlaufe ermöglicht auf einfache Weise eine reversibel und elastisch verformbare Ausgestaltung.

Vorteilhafte Ausgestaltungen und Weiterbildungen gehen aus den von Anspruch 1 abhängigen Ansprüchen hervor.

Die Stützschlaufe weist erfindungsgemäß in einer Ebene senkrecht zur Rotationsachse einen schlaufenartigen Querschnitt auf. Sie weist also in einer solchen Schnittebene zwei nebeneinander laufende Zweige auf. Die Verformung der Stützschlaufe, die einen mechanischen Kontakt über das Anschlagelement bewirkt, ist vorteilhaft eine Kompression der Stützschlaufe durch einen von der Rotorspule ausgehenden Anpressdruck. In dieser Ausführungsform ist die Stützschlaufe und damit die Abstützvorrichtung insbesondere zu einer Abstützung der Rotorspule gegen Kräfte senkrecht zur Rotationsachse geeignet. Diese Ausführung ist besonders vorteilhaft, da die meisten beim Betrieb und im Störfall an der Rotorspule auftretenden Kräfte senkrecht zur Rotationsachse liegen.

Die Stützschlaufe kann im Störfall durch Kompression in einer Richtung senkrecht zur Rotationsachse so weit verformt werden, dass durch das Anschlagelement ein mechanischer Kontakt zwischen Rotorspule und Rotorkörper vermittelt werden kann, durch den eine Überlastkraft zwischen Rotorspule und Rotorkörper übertragen werden kann. Rotorspule und Rotorkörper werden also nach der Kompression der Stützschlaufe durch das Anschlagelement in einen zusätzlichen Kontakt gebracht. So können Überlastkräfte durch das steifere Anschlagelement übertragen werden, und die mechanisch empfindlichere Stützschlaufe wird vor einer Schädigung durch die Überlastkräfte geschützt. Die Stützschlaufe kann dann so dimensioniert werden, dass sie nur den Kräften im Normalbetrieb und nicht den Kräften im Überlastfall standhalten muss.

Die zwischen Rotorspule und Rotorkörper durch die Stützschlaufe bewirkte Wärmeleitfähigkeit kann weniger als ein Drittel der durch den mechanischen Kontakt zwischen Rotorspule, Anschlagelement und Rotorkörper bewirkten Wärmeleitfähigkeit betragen. Besonders vorteilhaft kann die durch die Stützschlaufe bewirkte Wärmeübertragung weniger als ein Fünftel der durch das Anschlagelement bewirkten Wärmeübertragung sein. Da der über das Anschlagelement vermittelte mechanische und thermische Kontakt zwischen Rotorspule und Rotorkörper nur im Störfall überhaupt hergestellt wird, ist dann im Normalbetrieb die thermische Kopplung zwischen Spule und Rotorkörper vorteilhaft niedrig.

Die für die Wärmeleitung zwischen Rotorspule und Rotorkörper wirksame Querschnittsfläche der Stützschlaufe kann weniger als halb so groß sein wie die bei einem mechanischen Kontakt über das Anschlagelement für die Wärmeleitung wirksame Querschnittsfläche des Anschlagelements. Da die Stützschlaufe geringere Kräfte aushalten muss als das Anschlagelement, kann sie wesentlich dünner ausgebildet werden als das Anschlagelement. Zusätzlich oder alternativ kann die Stützschlaufe aus einem thermisch schlechter leitenden Material ausgebildet sein als das Anschlagelement, was die Wärmeleitung der ständig vorliegenden Verbindung über die Stützschlaufe vorteilhaft gering hält.

Die Stützschlaufe weist erfindungsgemäß in einer Ebene senkrecht zur Rotationsachse die Form eines spiegelsymmetrischen abgerundeten Bogens auf. Insbesondere kann die Stützschlaufe in einer solchen Ebene einen annähernd halbkreisförmigen, halbovalen, halbelliptischen, parabelförmigen, hyperbelförmigen oder auch abgerundet rechteckigen Querschnitt aufweisen.

Der mittlere Bereich des Bogens ist dann entweder mit der supraleitenden Spule verbunden, und die beidseitigen Schenkel des Bogens sind fest mit dem Rotorkörper verbunden. Oder es ist die umgekehrte Anordnung möglich, bei der der mittlere Bereich des Bogens mit dem Rotorkörper verbunden ist und die beidseitigen Schenkel des Bogens fest mit der supraleitenden Spule verbunden sind. Der mittlere Bereich des Bogens kann mit der Spule oder mit dem Rotorkörper über eine Verklebung, über eine mechanische Fixierung und/oder durch Andrücken mittels einer Kraft befestigt sein.

Eine derart ausgestaltete Stützschlaufe kann sich in dem Bereich zwischen den an Spule und Rotorkörper fixierten Stellen leicht elastisch verformen, wenn für die Stützschlaufe vorteilhaft ein ausreichend elastisches Material gewählt wird. In einer Richtung parallel zur Rotationsachse der Spule kann sich der Querschnitt der Stützschlaufe gleichbleibend fortsetzen. Beispielsweise kann bei einem halbkreisförmigen Querschnitt der Stützschlaufe insgesamt ein gleichmäßig geformtes elastisches Halbrohr vorliegen.

Die Stützschlaufe kann so weit elastisch verformbar sein, dass bei einem Normalbetrieb der Maschine mögliche Druckkräfte mit einer Komponente in Richtung einer Zentralachse der Stützschlaufe eine Bewegung der Spule in dieser Richtung von bis zu 5mm verursachen können. Ein Vorteil einer solchen Ausgestaltung ist, dass die Elastizität der Stützschlaufe so dimensioniert werden kann, dass durch unterschiedliche thermische Ausdehnung bedingte Längenänderungen ausgeglichen werden können.

Die Stützschlaufe kann so ausgelegt sein, dass eine Überlastkraft bei einem Störfall der Maschine zu einer reversiblen elastischen Verformung der Stützschlaufe mit einer abhängig von einer Druckkraft stetig verlaufenden Kompression führt. Im Unterschied zu einem abrupten Abknicken einer Stützstrebe vermeidet diese Ausgestaltung eine Schädigung und/oder eine Schwächung des Materials der Stützschlaufe und der zu stützenden Wicklung. Die Stützschlaufe kann durch den stetigen und elastischen Charakter der Verformung vorteilhaft so ausgelegt sein, dass sie ihre thermische und mechanische Funktionalität auch nach zahlreichen Störfällen erfüllt.

Das Anschlagelement ist fest mit der gekühlten Rotorspule verbunden und tritt nur im Störfall durch elastische Verformung der Stützschlaufe in mechanischen Kontakt mit dem Rotorkörper. In dieser Ausführungsform ist das Anschlagelement auch thermisch ständig an die Rotorspule gekoppelt und wird zusammen mit diesem zumindest auf eine Temperatur in der Nähe der Betriebstemperatur der Spule gekühlt. Bei einer Kompression der Stützschlaufe wird dann ein direkter Kontakt zwischen Anschlagelement und Rotorkörper hergestellt. Durch diesen zusätzlichen Kontakt werden die Überlastkräfte abgestützt, und das Anschlagelement wird thermisch mit dem warmen Rotorkörper gekoppelt. Das Anschlagelement wird dann allmählich erwärmt, und über einen längeren Zeitraum wird dann auch die Rotorspule erwärmt. Der Vorteil dieser Ausführungsform ist, dass durch die auf niedrige Temperatur gekühlte thermische Masse des Anschlagselements eine Erwärmung der Rotorspule im Störfall erst verzögert eintritt.

Alternativ ist das Anschlagelement fest mit dem Rotorkörper verbunden und wird nur im Störfall durch elastische Verformung der Stützschlaufe in mechanischen Kontakt mit der gekühlten Rotorspule gebracht. In dieser Ausführungsform ist das Anschlagelement im normalen Betriebszustand der Maschine warm und wird erst im Störfall durch den dann entstehenden thermischen Kontakt mit der Spule abgekühlt. Ein Vorteil ist, dass im Normalbetrieb die durch eine Kühlvorrichtung zu kühlende thermische Masse kleiner ist, und dass dann typischerweise eine geringere Kühlleistung nötig ist.

Die elektrische Maschine kann mehrere der vorab beschriebenen Abstützvorrichtungen mit jeweils einer elastisch verformbaren Stützschlaufe und jeweils einem steifen Anschlagelement umfassen. Dabei können die Abstützvorrichtungen zusammen eine Rotorspule oder auch eine Mehrzahl von Rotorspulen tragen. Die Stützschlaufen können so ausgelegt sein, dass sie die Rotorspule gegen bei einem Normalbetrieb der Spule auftretenden Kräfte abstützen und dabei einen über die Anschlagelemente vermittelten Kontakt zwischen Rotorspule und Rotorkörper verhindern. Vorteilhaft besteht also bei Normalbetrieb über keines der Anschlagelemente ein mechanischer Kontakt. Die Stützschlaufen können so weit elastisch verformbar sein, dass in einem Störungsfall ein mechanischer Kontakt zwischen Rotorkörper und Rotorspule über wenigstens eines der Anschlagelemente zustande kommen kann. Es können pro Rotorspule mehrere Anschlagelemente einen mechanischen Kontakt vermitteln. Es reicht für die erfindungsgemäße Funktionalität jedoch aus, wenn für eine Rotorspule mit wenigstens einem Anschlagelement aus einer Abstützvorrichtung ein zusätzlicher mechanischer Kontakt geschaffen wird, der die Spule gegen die auftretende Überlastkraft abstützt.

Es können mehrere Abstützvorrichtungen entlang einer Richtung parallel zur Rotationsachse so nebeneinander angeordnet sein, dass sie die Rotorspule gegen in einer Richtung senkrecht zur Rotationsachse wirkende Druckkräfte gemeinsam abstützen können. Durch eine solche Parallelschaltung mehrerer Abstützvorrichtungen können die Stützschlaufen der einzelnen Abstützvorrichtungen noch kleiner dimensioniert werden, und es kann insgesamt ein noch kleinerer thermisch wirksamer Querschnitt der Mehrzahl an Stützschlaufen erreicht werden.

Die bei Normalbetrieb auftretenden Kräfte können so entlang der gesamten Länge der Rotationsachse aufgefangen werden.

Alternativ oder zusätzlich können in einer Ebene senkrecht zur Rotationsachse mehrere Abstützvorrichtungen die Rotorspule so umgeben, dass sie die Rotorspule gemeinsam gegen in verschiedene Raumrichtungen wirkende Kräfte abstützen können. Insbesondere ist diese Ausführungsform vorteilhaft, wenn im Normalbetrieb und/oder im Störfall Kräfte in verschiedenen Raumrichtungen, insbesondere in verschiedenen Raumrichtungen senkrecht zur Rotationsachse wirken können.

Die Rotorspule kann in einem gekühlten Gehäuse angeordnet sein, das durch die wenigstens eine Abstützvorrichtung mit dem Rotorkörper mechanisch verbunden ist. In dieser Ausführungsform wird das Gehäuse also zusammen mit der supraleitenden Spule gekühlt und mechanisch gehalten.

Die supraleitende Rotorspule kann ein hochtemperatursupraleitendes Material umfassen. Hochtemperatursupraleiter oder auch Hoch-T_{c}-Supraleiter (HTS) sind supraleitende Materialien mit einer Sprungtemperatur oberhalb von 25 K und bei einigen Materialklassen, beispielsweise den Kuprat-Supraleitern, oberhalb von 77 K. Bei Hochtemperatursupraleitern kann die Betriebstemperatur durch Kühlung mit anderen kryogenen Flüssigkeiten als flüssigem Helium erreicht werden. Sie eignen sich also für Anwendungen, bei denen eine Kühlung mit flüssigem Helium zu aufwendig und/oder unwirtschaftlich ist. Außerdem eignen sie sich für Anwendungen, bei denen hohe kritische Stromdichten und/oder hohe kritische Magnetfeldstärken benötigt werden.

Die Erfindung wird im Folgenden anhand zweier bevorzugter Ausführungsbeispiele unter Bezugnahme auf die angehängten Zeichnungen beschrieben, von denen:
- Fig. 1: einen schematischen seitlichen Querschnitt einer Detailansicht einer elektrischen Maschine nach dem ersten Ausführungsbeispiel zeigt,
- Fig. 2: eine vergleichbare Detailansicht bei Einwirkung einer im Normalbetrieb auftretenden Kraft 11 zeigt,
- Fig. 3: eine vergleichbare Detailansicht bei Einwirkung einer Überlastkraft 13 zeigt,
- Fig. 4: einen schematischen Querschnitt einer elektrischen Maschine 1 nach einem zweiten Ausführungsbeispiel zeigt.

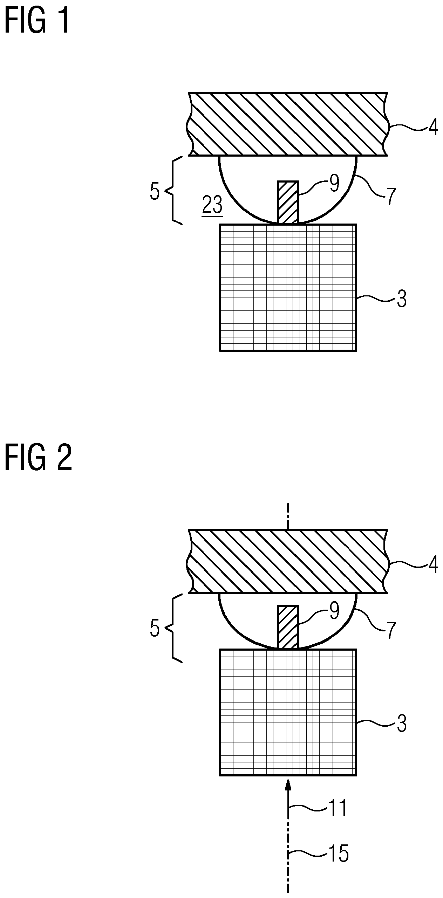

Fig. 1 zeigt einen schematischen seitlichen Querschnitt einer Detailansicht des ersten Ausführungsbeispiels im Bereich der Abstützvorrichtung 5 der elektrischen Maschine 1 ohne Einwirkung einer Kraft. Gezeigt ist ein Teilbereich des Rotorkörpers 4, an dem eine Rotorspule 3 über eine Abstützvorrichtung 5 befestigt ist. Der Rotorkörper 4 ist ungekühlt, die Rotorspule 3 ist mittels einer hier nicht gezeigten Kühlvorrichtung auf eine Betriebstemperatur von etwa 77 K gekühlt. Die Rotorspule 3 umfasst in diesem Beispiel eine hochtemperatursupraleitende Wicklung mit einem kuprathaltigen Bandleitermaterial.

Zwischen Rotorspule 3 und Rotorkörper 4 ist die Abstützvorrichtung 5 angeordnet, die eine Stützschlaufe 7 und ein Anschlagelement 9 umfasst. Die Stützschlaufe 7 ist sowohl mit dem Rotorkörper 4 als auch mit der Rotorspule 3 fest verbunden. Das Anschlagelement 9 ist dagegen nur über den mittleren Bereich der Stützschlaufe 7 an der Rotorspule 3 befestigt. Im in Fig. 1 gezeigten Fall ohne Krafteinwirkung besteht kein mechanischer Kontakt zwischen Anschlagelement 9 und Rotorkörper 4, abgesehen von der Verbindung über die Stützschlaufe 7. Der Abstand zwischen Anschlagelement und Rotorkörper kann beispielsweise bis zu 5 mm betragen.

Der Zwischenraum 23 zwischen ungekühltem Rotorkörper 4 und Rotorspule 3 ist neben der gezeigten Abstützvorrichtung 5 ein evakuierter Raum 23, um eine thermische Isolation zwischen diesen thermischen Massen mit sehr unterschiedlicher Temperatur zu bewirken. Vorteilhaft kann in diesen Raum auch noch Superisolationsfolie eingebracht werden.

Die Stützschlaufe 7 ist im in Fig. 1 gezeigten unverformten Zustand ein halbrohrförmiger Körper mit etwa halbkreisförmigem Querschnitt, der sich in der Richtung senkrecht zur gezeigten Bildebene gleichmäßig fortsetzt. Der mittlere Bereich des Bogens der Stützschlaufe 7 ist an der Rotorspule 3 befestigt, und die beiden Schenkel des Bogens sind jeweils an dem Rotorkörper 4 befestigt. Eine umgekehrte Konfiguration ist jedoch auch generell möglich, bei der der Mittelpunkt des Bogens mit dem Rotorkörper 4 und die Schenkel des Bogens mit der Rotorspule 3 verbunden sind.

Die Bildebene stellt eine Ebene senkrecht zu der Rotationsachse der Rotorspule 3 und des Rotorkörpers 4 dar. Rotorspule 3 und Rotorkörper rotieren gemeinsam um diese Achse. Die Rotationsachse selbst ist hier nicht dargestellt, da sie sich im Mittelpunkt des Rotorkörpers und relativ weit weg von dem hier gezeigten Ausschnitt des Rotorkörpers befindet. Bezogen auf die Fig. 1 würde die Rotationsachse die Bildebene weit oberhalb des gezeigten Ausschnitts senkrecht schneiden.

Fig. 2 zeigt einen entsprechenden Ausschnitt der elektrischen Maschine 1 des ersten Ausführungsbeispiels bei Einwirkung einer im Normalbetrieb der Maschine auftretenden Druckkraft 11. Die Druckkraft 11 wirkt in diesem Beispiel senkrecht zur Rotationsachse der Rotorspule und entlang einer Zentralachse 15 der Stützschlaufe 7. Durch die Druckkraft 11 wird die Stützschlaufe 7 elastisch komprimiert. Der halbkreisförmige Querschnitt ändert sich durch die Kompression zu einem eher halbovalen Querschnitt. Die elastische Verformung kann bei im Normalbetrieb auftretenden Kräften 11 beispielsweise eine Bewegung der Rotorspule 3 um bis zu 5 mm bewirken. Die Kraft 11 reicht jedoch nicht aus, um das Anschlagelement 9 in mechanischen Kontakt mit dem Rotorkörper 4 zu bringen. Die Stützschlaufe 7 ist in ihrer Festigkeit ausreichend dimensioniert, um die Rotorspule 3 gegen im Normalbetrieb auftretende Kräfte 11 abzustützen. Die im Normalbetrieb auftretenden Kräfte 11 können beispielsweise in einem Bereich bis zu 5 kN/m liegen.

Die Stützschlaufe 7 kann auch Kräften 11 entgegenwirken, die einen Winkel mit der Zentralachse 15 der Stützschlaufe 7 einschließen, aber eine Komponente in Richtung dieser Zentralachse 15 aufweisen. Auch dann tritt eine leichte Kompression der Stützschlaufe 7 ein, die von der Stützschlaufe ausgehalten wird und nicht zu einer Berührung des Anschlagelements 9 mit dem Rotorkörper 4 führt.

Für andere Kräfte 11 im Normalbetrieb, die keine Komponente in Richtung der Zentralachse 11 der Stützschlaufe 7 aufweisen, können weitere Abstützvorrichtungen 5 zur Abstützung der Rotorspule 3 in andere Raumrichtungen vorgesehen sein. Durch die festen Verbindungen zwischen Rotorkörper 4 und Stützschlaufe 7 sowie zwischen Rotorspule 3 und Stützschlaufe 7 können auch Zugkräfte sowie seitlich wirkende Kräfte zumindest im Bereich der bei Normalbetrieb wirkenden Kräfte mittels der Stützschlaufe 7 abgefangen werden.

Weiterhin kann eine Serie in Abstützvorrichtungen 5 vorgesehen sein, die in einer Richtung senkrecht zur Papierebene hintereinandergeschaltet sind und jeweils als kurzes Halbrohrelement ausgebildet sind. Beispielsweise kann alle 2 bis 10 cm entlang einer Richtung parallel zur Rotationsachse ein solches Abstützelement angeordnet sein.

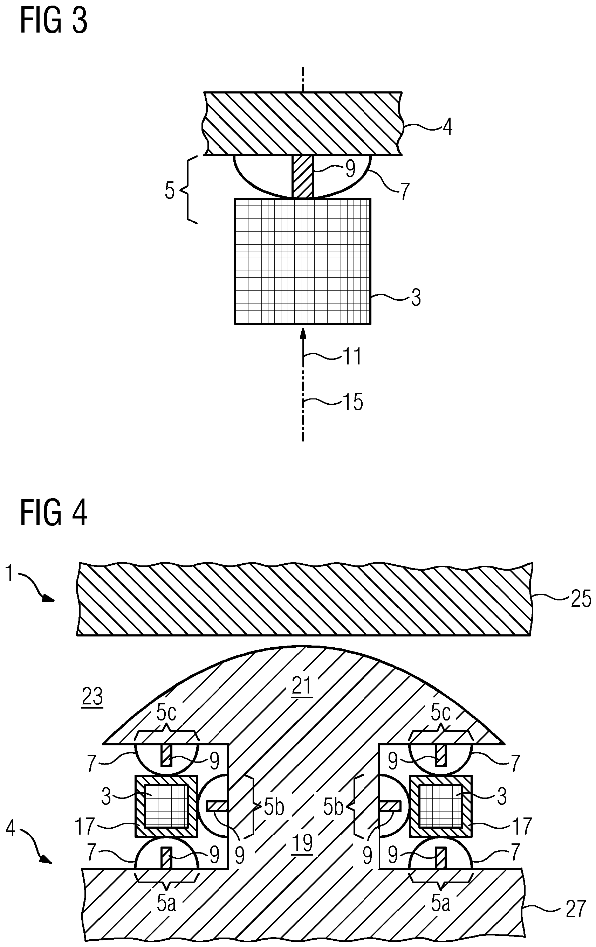

Fig. 3 zeigt Fig. 2 zeigt einen entsprechenden Ausschnitt der elektrischen Maschine 1 des ersten Ausführungsbeispiels bei Einwirkung einer Überlastkraft 13 bei einem Störfall der elektrischen Maschine 1. Eine Überlastkraft 13 mit einer Komponente in Richtung der Zentralachse 15 der Stützschlaufe 7 kann die Stützschlaufe 7 so weit komprimieren, dass das Anschlagelement 9 in direkten mechanischen Kontakt mit dem Rotorkörper 4 tritt. Hierdurch wird die Stützschlaufe 7 von der Einwirkung der Überlastkraft 13 entlastet, und es tritt im Wesentlichen keine weitere Kompression der Stützschlaufe 7 auf.

Die Abstützvorrichtung kann vorteilhaft so dimensioniert sein, dass bei einer Überlastkraft 13 von wenigstens dem Doppelten einer zulässigen Druckkraft 11 im Normalbetrieb ein mechanischer Kontakt zwischen Rotorkörper 4 und Rotorspule 3 über das Anschlagelement 9 hergestellt wird. Vorteilhaft kann die zulässige Druckkraft 11 im Normalbetrieb in einem Bereich unterhalb von 10 kN/m, beispielsweise zwischen 0.4 kN/m und 5 kN/m betragen. Die hier angegebenen Kräfte sind jeweils für axial entlang der Rotationsachse ausgerichtete Abschnitte der Spule angegeben und auf die axiale Länge dieser Abschnitte bezogen. Im Störfall können die entsprechenden Überlastkräfte 13 beispielsweise bis zu 80 kN/m betragen. Das Anschlagelement 9 weist zwischen Rotorkörper 4 und Rotorspule 3 eine wesentlich größere verbindende Querschnittsfläche auf als die beiden Schenkel der Stützschlaufe 7 zusammen. Beispielsweise kann die für die thermische Verbindung wirksame Querschnittsfläche vorteilhaft mehr als das Dreifache, besonders vorteilhaft wenigstens das Fünffache der thermisch wirksamen Querschnittsfläche der Stützschlaufe 7 betragen. Auch das Material der Stützschlaufe 7 kann vorteilhaft so gewählt sein, dass es eine niedrigere spezifische Wärmeleitfähigkeit aufweist als das Material des Anschlagelements 9. Insgesamt ist die durch eine Verbindung über die Stützschlaufe 7 bedingte thermische Leitfähigkeit wesentlich niedriger als die durch eine Verbindung über das Anschlagelement 9 bewirkte thermische Leitfähigkeit zwischen Rotorspule 3 und Rotorkörper 4.

Das Material der Stützschlaufe umfasst in diesem Beispiel glasfaserverstärkter Kunststoff. Andere geeignete Materialien sind kohlenstofffaserverstärkter Kunststoff, Titan oder Edelstahl. Die spezifische Wärmeleitfähigkeit des Materials der Stützschlaufe kann vorteilhaft unterhalb von 50 W/m·K liegen. Das Material des Anschlagelements umfasst in diesem Beispiel ebenfalls glasfaserverstärkten Kunststoff. Andere geeignete Materialien sind kohlenstofffaserverstärkter Kunststoff, Polyetheretherketon, Titan, Edelstahl oder Kunststoffe.

Auch zum Abstützen der Rotorspule 3 gegen Überlastkräfte 13 mit anderen Raumrichtungen als der in Fig. 1 gezeigten können weitere Abstützvorrichtungen mit anderen räumlichen Orientierungen von Stützschlaufe 7 und Anschlagelement 9 vorgesehen sein.

Fig. 4 zeigt einen Ausschnitt einer elektrischen Maschine 1 nach einem zweiten Ausführungsbeispiel der Erfindung im schematischen Querschnitt. Gezeigt ist eine Rotorspule 3, die in einer Wicklungsebene senkrecht zur gezeigten Bildebene um einen Polkern 19 gelegt ist. Der Polkern 19 ist dabei auf einer Seite fest mit dem zylindrischen Träger 27 eines Rotorkörpers 4 verbunden und wird zur anderen Seite hin von einer Polkappe 21 begrenzt. Dabei sind Polkappe 21 und Polkern 19 Teile des gesamten, ungekühlten Rotorkörpers 4. Die Rotorspule 3 ist auch hier auf eine Betriebstemperatur von etwa 77 K gekühlt. Sie ist in einem Gehäuse 17 angeordnet, das ebenfalls auf etwa diese Betriebstemperatur gekühlt wird. Die Rotorspule 3 wird zusammen mit dem Gehäuse 17 durch mehrere Abstützvorrichtungen 5a, 5b, 5c gegen die verschiedenen Bereiche des Rotorkörpers 4 abgestützt. Sechs dieser Abstützvorrichtungen sind im gezeigten Querschnitt beispielhaft dargestellt.

Die elektrische Maschine 1 ist in diesem Beispiel eine 16-polige Synchronmaschine, die auf dem Rotorkörper 4 insgesamt 16 ähnliche Rotorspulen 3 auf entsprechenden Polkernen 19 mit ähnlichen Abstützvorrichtungen 5a, 5b, 5c aufweist. Der Rotorkörper 4 mit den Rotorspulen 3 ist um eine Rotationsachse drehbar gelagert. Auch in Fig. 2 liegt die Rotationsachse senkrecht zur gezeigten Bildebene. Sie schneidet die Bildebene senkrecht im Bereich des Mittelpunkts der im Querschnitt kreisförmigen Oberfläche des Rotorzylinders 27. Der gesamte Rotor 3,4 rotiert relativ zu einem Stator 25, der in Fig. durch seinen Umriss schematisch dargestellt ist. Auch der Stator 25 ist ungekühlt, und der zwischen Stator 25 und Rotor 3,4 frei liegende Bereich ist evakuiert, um eine thermische Isolation der Rotorspule 3 gegen die warme Umgebung zu bewirken.

In dem zweiten Ausführungsbeispiel ist jeder der beiden gezeigten Zweige der Rotorspule 3 in drei Raumrichtungen gegen den Rotorkörper 4 abgestützt. Die Abstützvorrichtungen 5a dienen dabei hauptsächlich zur Abstützung gegen den Rotorzylinder 27 bei radialen Druckkräften. Die Abstützvorrichtungen 5b dienen hauptsächlich zur Abstützung gegen tangentiale Kräfte, wobei die beiden Spulenzweige jeweils gegen tangentiale Kräfte in entgegengesetzten Richtungen abgestützt sind. Die Abstützvorrichtungen 5c dienen hauptsächlich zur Abstützung gegen die Polkappe 21 bei radialen Zugkräften. Alternativ oder zusätzlich können weitere Abstützvorrichtungen 5 für Kräfte entlang weiterer Raumrichtungen vorgesehen sein, und/oder es können senkrecht zur gezeigten Bildebene weitere Abstützvorrichtungen 5a, 5b, 5c parallelgeschaltet sein.

## Patentansprüche

1. Elektrische Maschine (1) mit
- wenigstens einer um eine Rotationsachse drehbar gelagerten, zu kühlenden supraleitenden Rotorspule (3),
- einem Rotorkörper (4),
- und wenigstens einer zwischen der Rotorspule (3) und dem Rotorkörper (4) angeordneten Abstützvorrichtung (5) zur Abstützung der wenigsten einen Rotorspule (3) gegen den Rotorkörper (4),
- wobei die Abstützvorrichtung (5) ein elastisch verformbares Stützelement (7) und ein Anschlagelement (9) umfasst,
- wobei das Stützelement (7) so ausgelegt ist, dass es die wenigstens eine Rotorspule (3) gegen bei einem Normalbetrieb der Spule auftretende Kräfte (11) abstützt und dabei einen über das Anschlagelement (9) vermittelten Kontakt zwischen Rotorspule (3) und Rotorkörper (4) verhindert,
**dadurch gekennzeichnet, dass**
- das Stützelement (7) einen in einer Ebene senkrecht zur Rotationsachse schlaufenartigen Querschnitt aufweist,
- wobei das Stützelement (7) in einer Ebene senkrecht zur Rotationsachse die Querschnittsform eines spiegelsymmetrischen, abgerundeten Bogens aufweist,
- wobei ein mittlerer Bereich des Bogens an der Rotorspule (3) und die beiden Schenkel des Bogens jeweils mit dem Rotorkörper (4) fest verbunden sind und das Anschlagelement (9) über den mittleren Bereich an der Rotorspule (3) befestigt ist, oder wobei ein mittlerer Bereich des Bogens am Rotorkörper (4) und die beiden Schenkel des Bogens jeweils mit der Rotorspule (3) fest verbunden sind und das Anschlagelement (9) über den mittleren Bereich am Rotorkörper (4) befestigt ist,
- wobei das Stützelement (7) soweit elastisch verformbar ist, dass durch in einem Störungsfall auftretende Überlastkräfte (13) ein mechanischer Kontakt zwischen Rotorspule (3) und Rotorkörper (4) über das Anschlagelement (9) zustande kommen kann.

2. Elektrische Maschine (1) nach Anspruch 1, bei der das Stützelement (7) im Störfall durch Kompression in einer Richtung senkrecht zur Rotationsachse so weit verformt werden kann, dass durch das Anschlagelement (9) ein mechanischer Kontakt zwischen Rotorspule (3) und Rotorkörper (4) vermittelt kann, durch den eine Überlastkraft (13) übertragen werden kann.

3. Elektrische Maschine (1) nach einem der Ansprüche 1 oder 2, bei der die zwischen Rotorspule (3) und Rotorkörper (4) durch das Stützelement (7) bewirkte Wärmeleitfähigkeit weniger als ein Drittel der durch einen mechanischen Kontakt zwischen Rotorspule (3), Anschlagelement (9) und Rotorkörper (4) bewirkten Wärmeleitfähigkeit beträgt.

4. Elektrische Maschine (1) nach einem der vorhergehenden Ansprüche, bei der die für die Wärmeleitung zwischen Rotorspule (3) und Rotorkörper (4) wirksame Querschnittsfläche des Stützelements (7) weniger als halb so groß ist wie die bei einem mechanischen Kontakt über das Anschlagelement (9) für die Wärmeleitung wirksame Querschnittsfläche des Anschlagelements (9).

5. Elektrische Maschine (1) nach einem der vorhergehenden Ansprüche, bei der das Stützelement (7) soweit elastisch verformbar ist, dass bei einem Normalbetrieb der Maschine (1) mögliche Druckkräfte (11) mit einer Komponente in Richtung einer Zentralachse (15) des Stützelements (7) eine Bewegung der Spule in dieser Richtung von bis zu 5 mm verursachen können.

6. Elektrische Maschine (1) nach einem der vorhergehenden Ansprüche, bei der eine Überlastkraft (13) beim Störfall der Maschine (1) zu einer reversiblen, elastischen Verformung des Stützelements (7) mit einer abhängig von einer Druckkraft (11,13) stetig verlaufenden Kompression führt.

7. Elektrische Maschine (1) nach einem der vorhergehenden Ansprüche, bei der das Anschlagelement (9) fest mit der gekühlten Rotorspule (3) verbunden ist und nur im Störfall durch
elastische Verformung des Stützelements (7) in direkten mechanischen Kontakt mit dem Rotorkörper (4) treten kann.

8. Elektrische Maschine (1) nach einem der Ansprüche 1 bis 7, bei der das Anschlagelement (9) fest mit dem Rotorkörper (4) verbunden ist und nur im Störfall durch elastische Verformung des Stützelements (7) in direkten mechanischen Kontakt mit der gekühlten Rotorspule (3) treten kann.

9. Elektrische Maschine (1) nach einem der vorhergehenden Ansprüche, die mehrere zwischen dem Rotorkörper (4) und der Rotorspule (3) angeordnete Abstützvorrichtungen (5a,5b,5c) mit elastisch verformbaren Stützelementen (7) mit einem in einer Ebene senkrecht zur Rotationsachse schlaufenartigen Querschnitt und steifen Anschlagelementen (9) umfasst,
- wobei die Stützelemente (7) jeweils in einer Ebene senkrecht zur Rotationsachse die Querschnittsform eines spiegelsymmetrischen, abgerundeten Bogens aufweisen,
- wobei ein mittlerer Bereich des Bogens an der Rotorspule (3) und die Schenkel des Bogens jeweils mit dem Rotorkörper (4) fest verbunden sind und das Anschlagelement (9) über den mittleren Bereich an der Rotorspule (3) befestigt ist, oder wobei ein mittlerer Bereich des Bogens am Rotorkörper (4) und die Schenkel des Bogens jeweils mit der Rotorspule (3) fest verbunden sind und das Anschlagelement (9) über den mittleren Bereich am Rotorkörper (4) befestigt ist,
- wobei die Stützelemente (7) jeweils so ausgelegt sind, dass sie die Rotorspule (3) gegen bei einem Normalbetrieb der Spule (3) auftretende Kräfte (11) abstützen und dabei einen über die Anschlagelemente (9) vermittelten Kontakt zwischen Rotorspule (3) und Rotorkörper (4) verhindern
- und wobei die Stützelemente (7) soweit elastisch verformbar sind, dass in einem Störungsfall ein mechanischer Kontakt zwischen Rotorspule (3) und Rotorkörper (4) über wenigstens eines der Anschlagelemente (9) zustande kommen kann.

10. Elektrische Maschine (1) nach Anspruch 9, bei der mehrere Abstützvorrichtungen (5a,5b,5c) entlang einer Richtung parallel zur Rotationsachse so nebeneinander angeordnet sind, dass sie die Rotorspule (3) gegen in einer Richtung senkrecht zur Rotationsachse wirkende Druckkräfte (11,13) gemeinsam abstützen.

11. Elektrische Maschine (1) nach einem der Ansprüche 9 oder 10, bei der in einer Ebene senkrecht zur Rotationsachse mehrere Abstützrichtungen (5a,5b,5c) die Rotorspule (3) so umgeben, dass sie die Rotorspule (3) gemeinsam gegen in verschiedene Raumrichtungen wirkende Kräfte (11,13) abstützen können.

12. Elektrische Maschine (1) nach einem der vorhergehenden Ansprüche, bei der die Rotorspule (3) in einem gekühlten Gehäuse (17) angeordnet ist, das durch die wenigstens eine Abstützvorrichtung (5) mit dem Rotorkörper (4) mechanisch verbunden ist.

13. Elektrische Maschine (1) nach einem der vorhergehenden Ansprüche, bei der die supraleitende Rotorspule (3) ein hochtemperatursupraleitendes Material umfasst.

## Claims

1. Electric machine (1) with
- at least one superconducting rotor coil (3) which is to be cooled and is mounted such that it can be rotated about a rotational axis,
- a rotor body (4),
- and at least one supporting apparatus (5) which is arranged between the rotor coil (3) and the rotor body (4), for support of the at least one rotor coil (3) against the rotor body (4),
- the supporting apparatus (5) comprising an elastically deformable supporting element (7) and a stop element (9),
- the supporting element (7) being designed in such a way that it supports the at least one rotor coil (3) against forces (11) which occur during normal operation of the coil, and in the process prevents contact between the rotor coil (3) and the rotor body (4), which contact is imparted via the stop element (9),
**characterized in that**
- the supporting element (7) has a loop-like cross section in a plane perpendicularly with respect to the rotational axis,
- the supporting element (7) having, in a plane perpendicularly with respect to the rotational axis, the cross-sectional shape of a mirror-symmetrical, rounded arc,
- a central region of the arc on the rotor coil (3) and the two limbs of the arc being connected fixedly in each case to the rotor body (4), and the stop element (9) being fastened via the central region to the rotor coil (3), or a central region of the arc on the rotor body (4) and the two limbs of the arc being connected fixedly in each case to the rotor coil (3), and the stop element (9) being fastened via the central region to the rotor body (4) ,
- the supporting element (7) being elastically deformable to such an extent that a mechanical contact can come about between the rotor coil (3) and the rotor body (4) via the stop element (9) as a result of overload forces (13) which occur in the case of a malfunction.

2. Electric machine (1) according to Claim 1, in the case of which, in the case of a malfunction, the supporting element (7) can be deformed in a direction perpendicularly with respect to the rotational axis by way of compression, to such an extent that a mechanical contact can be imparted between the rotor coil (3) and the rotor body (4) by way of the stop element (9), by way of which mechanical contact an overload force (13) can be transmitted.

3. Electric machine (1) according to either of Claims 1 and 2, in the case of which the thermal conductivity which is brought about between the rotor coil (3) and the rotor body (4) by way of the supporting element (7) is less than one third of the thermal conductivity which is brought about by way of a mechanical contact between the rotor coil (3), the stop element (9) and the rotor body (4) .

4. Electric machine (1) according to one of the preceding claims, in the case of which that cross-sectional area of the supporting element (7) which is active for the thermal conduction between the rotor coil (3) and the rotor body (4) is less than half as great as that cross-sectional area of the stop element (9) which is active for the thermal conduction in the case of a mechanical contact via the stop element (9).

5. Electric machine (1) according to one of the preceding claims, in the case of which the supporting element (7) is elastically deformable to such an extent that, during normal operation of the machine (1), possible pressure forces (11) with a component in the direction of a central axis (15) of the supporting element (7) can cause a movement of the coil in this direction of up to 5 mm.

6. Electric machine (1) according to one of the preceding claims, in the case of which, in the case of a malfunction of the machine (1), an overload force (13) leads to a reversible, elastic deformation of the supporting element (7) with a compression which proceeds constantly in a manner which is dependent on a pressure force (11, 13).

7. Electric machine (1) according to one of the preceding claims, in the case of which the stop element (9) is connected fixedly to the cooled rotor coil (3), and can pass into direct mechanical contact with the rotor body (4) only in the case of a disruption by way of elastic deformation of the supporting element (7).

8. Electric machine (1) according to one of Claims 1 to 7, in the case of which the stop element (9) is connected fixedly to the rotor body (4), and can pass into direct mechanical contact with the cooled rotor coil (3) only in the case of a disruption by way of elastic deformation of the supporting element (7).

9. Electric machine (1) according to one of the preceding claims which comprises a plurality of supporting apparatuses (5a, 5b, 5c) which are arranged between the rotor body (4) and the rotor coil (3) with elastically deformable supporting elements (7) with a loop-like cross section in a plane perpendicularly with respect to the rotational axis, and with rigid stop elements (9),
- the supporting elements (7) having the cross-sectional shape of a mirror-symmetrical, rounded arc in each case in a plane perpendicularly with respect to the rotational axis,
- a central region of the arc on the rotor coil (3) and the limbs of the arc being connected fixedly in each case to the rotor body (4), and the stop element (9) being fastened via the central region to the rotor coil (3), or a central region of the arc on the rotor body (4) and the limbs of the arc being connected fixedly in each case to the rotor coil (3), and the stop element (9) being fastened via the central region to the rotor body (4) ,
- the supporting elements (7) being designed in each case in such a way that they support the rotor coil (3) against forces (11) which occur during normal operation of the coil (3), and in the process prevent a contact which is imparted via the stop elements (9) between the rotor coil (3) and the rotor body (4),
- and the supporting elements (7) being elastically deformable to such an extent that, in the case of a malfunction, a mechanical contact can come about between the rotor coil (3) and the rotor body (4) via at least one of the stop elements (9).

10. Electric machine (1) according to Claim 9, in the case of which a plurality of supporting apparatuses (5a, 5b, 5c) are arranged next to one another along a direction parallel to the rotational axis, in such a way that they together support the rotor coil (3) against pressure forces (11, 13) which act in a direction perpendicularly with respect to the rotational axis.

11. Electric machine (1) according to either of Claims 9 and 10, in the case of which, in a plane perpendicularly with respect to the rotational axis, a plurality of supporting apparatuses (5a, 5b, 5c) surround the rotor coil (3) in such a way that they can jointly support the rotor coil (3) against forces (11, 13) which act in various spatial directions.

12. Electric machine (1) according to one of the preceding claims, in the case of which the rotor coil (3) is arranged in a cooled housing (17) which is connected mechanically to the rotor body (4) by way of the at least one supporting apparatus (5).

13. Electric machine (1) according to one of the preceding claims, in the case of which the superconducting rotor coil (3) comprises a high-temperature superconducting material.

## Revendications

1. Machine électrique (1), comprenant
- au moins une bobine de rotor (3) supraconductrice à refroidir, monté à rotation autour d'un axe de rotation,
- un corps de rotor (4),
- et au moins un dispositif d'appui (5) disposé entre la bobine de rotor (3) et le corps de rotor (4), servant à l'appui de l'au moins une bobine de rotor (3) contre le corps de rotor (4),
- le dispositif d'appui (5) comportant un élément de soutien (7) déformable élastiquement et un élément de butée (9),
- l'élément de soutien (7) étant conçu de telle sorte qu'il soutient l'au moins une bobine de rotor (3) contre les forces (11) qui se produisent lors d'un fonctionnement normal de la bobine et empêche ici un contact communiqué par le biais de l'élément de butée (9) entre la bobine de rotor (3) et le corps de rotor (4), **caractérisée en ce que**
- l'élément de soutien (7) présente une section transversale en forme de boucle dans un plan perpendiculaire à l'axe de rotation,
- l'élément de soutien (7) présentant, dans un plan perpendiculaire à l'axe de rotation, la forme en section transversale d'un arc arrondi à symétrie en miroir,
- une zone centrale de l'arc étant reliée à demeure à la bobine de rotor (3) et les deux branches de l'arc respectivement au corps de rotor (4) et l'élément de butée (9) étant fixé à la bobine de rotor (3) par le biais de la zone centrale, ou une zone centrale de l'arc étant reliée à demeure au corps de rotor (4) et les deux branches de l'arc respectivement à la bobine de rotor (3) et l'élément de butée (9) étant fixé au corps de rotor (4) par le biais de la zone centrale,
- l'élément de soutien (7) étant déformable élastiquement à tel point qu'un contact mécanique entre la bobine de rotor (3) et le corps de rotor (4) peut avoir lieu par le biais de l'élément de butée (9) du fait des forces de surcharge (13) qui se produisent dans le cas d'une défaillance.

2. Machine électrique (1) selon la revendication 1, avec laquelle l'élément de soutien (7), dans le cas d'une défaillance, peut être déformé par compression dans une direction perpendiculaire à l'axe de rotation à tel point qu'un contact mécanique peut être communiqué par l'élément de butée (9) entre la bobine de rotor (3) et le corps de rotor (4), par le biais duquel peut être transmise ladite force de surcharge (13).

3. Machine électrique (1) selon l'une des revendications 1 ou 2, avec laquelle la conductivité thermique produite entre la bobine de rotor (3) et le corps de rotor (4) par l'élément de soutien (7) est égale à moins d'un tiers de la conductivité thermique produite par un contact mécanique entre la bobine de rotor (3), l'élément de butée (9) et le corps de rotor (4).

4. Machine électrique (1) selon l'une des revendications précédentes, avec laquelle la surface de section transversale de l'élément de soutien (7), efficace pour la conduction thermique entre la bobine de rotor (3) et le corps de rotor (4), est inférieure à la moitié de la surface de section transversale de l'élément de butée (9) efficace pour la conduction thermique lors d'un contact mécanique par le biais de l'élément de butée (9) .

5. Machine électrique (1) selon l'une des revendications précédentes, avec laquelle l'élément de soutien (7) est déformable élastiquement à tel point que lors d'un fonctionnement normal de la machine (1), les forces de pression (11) possibles avec une composante en direction d'un axe central (15) de l'élément de soutien (7) peuvent provoquer un mouvement de la bobine dans cette direction pouvant atteindre 5 mm.

6. Machine électrique (1) selon l'une des revendications précédentes, avec laquelle une force de surcharge (13) dans le cas d'une défaillance de la machine (1) donne lieu à une déformation élastique réversible de l'élément de soutien (7) avec une compression qui suit un tracé constant dépendante d'une force de pression (11, 13).

7. Machine électrique (1) selon l'une des revendications précédentes, avec laquelle l'élément de butée (9) est relié à demeure à la bobine de rotor (3) refroidie et ne peut entrer en contact mécanique direct avec le corps de rotor (4) que dans le cas d'une défaillance par une déformation élastique de l'élément de soutien (7).

8. Machine électrique (1) selon l'une des revendications 1 à 7, avec laquelle l'élément de butée (9) est relié à demeure au corps de rotor (4) ne peut entrer en contact mécanique direct avec la bobine de rotor (3) refroidie que dans le cas d'une défaillance par une déformation élastique de l'élément de soutien (7).

9. Machine électrique (1) selon l'une des revendications précédentes, qui comporte plusieurs dispositifs d'appui (5a, 5b, 5c) disposés entre le corps de rotor (4) et la bobine de rotor (3) dotés d'éléments de soutien (7) déformables élastiquement, ayant une section transversale en forme de boucle dans un plan perpendiculaire à l'axe de rotation, et des éléments de butée (9) rigides,
- les éléments de soutien (7) présentant, respectivement dans un plan perpendiculaire à l'axe de rotation, la forme en section transversale d'un arc arrondi à symétrie en miroir,
- une zone centrale de l'arc étant reliée à demeure à la bobine de rotor (3) et les 2 branches de l'arc respectivement au corps de rotor (4) et l'élément de butée (9) étant fixé à la bobine de rotor (3) par le biais de la zone centrale, ou une zone centrale de l'arc étant reliée à demeure au corps de rotor (4) et les 2 branches de l'arc respectivement à la bobine de rotor (3) et l'élément de butée (9) étant fixé au corps de rotor (4) par le biais de la zone centrale,
- les éléments de soutien (7) étant respectivement conçus de telle sorte qu'ils soutiennent l'au moins une bobine de rotor (3) contre les forces (11) qui se produisent lors d'un fonctionnement normal de la bobine et empêchent ici un contact communiqué par le biais des éléments de butée (9) entre la bobine de rotor (3) et le corps de rotor (4),
- et les éléments de soutien (7) étant déformables élastiquement à tel point qu'un contact mécanique entre la bobine de rotor (3) et le corps de rotor (4) peut avoir lieu par le biais d'au moins l'un des éléments de butée (9) dans le cas d'une défaillance.

10. Machine électrique (1) selon la revendication 9, avec laquelle plusieurs dispositifs d'appui (5a, 5b, 5c) sont disposés les uns à côté des autres le long d'une direction parallèle à l'axe de rotation de telle sorte qu'ils soutiennent ensemble la bobine de rotor (3) contre les forces de pression (11, 13) qui agissent dans une direction perpendiculaire à l'axe de rotation.

11. Machine électrique (1) selon l'une des revendications 9 ou 10, avec laquelle plusieurs dispositifs d'appui (5a, 5b, 5c) entourent la bobine de rotor (3) dans un plan perpendiculaire à l'axe de rotation de telle sorte qu'ils peuvent soutenir la bobine de rotor (3) ensemble contre les forces (11, 13) agissant dans différentes directions spatiales.

12. Machine électrique (1) selon l'une des revendications précédentes, avec laquelle la bobine de rotor (3) est disposée dans un boîtier (17) refroidi de telle sorte qu'elle est reliée mécaniquement au corps de rotor (4) par le biais de l'au moins un dispositif d'appui (5) .

13. Machine électrique (1) selon l'une des revendications précédentes, avec laquelle la bobine de rotor (3) supraconductrice comporte un matériau supraconducteur à haute température.
